# EUROPEAN PATENT APPLICATION

(11) **EP 3 955 484 A1**
(43) Date of publication of application: **16.02.2022**
(21) Application number: 20787627.7
(22) Date of filing: 17.03.2020
(51) Int. Cl.: H04L 1/00

(54) **FEC MODE SYNCHRONIZATION METHOD AND SYSTEM, AND PRIMARY NODE AND SLAVE NODE**

(30) Priority: 12.04.2019 CN 201910298537
(71) Applicant: ZTE Corporation, Shenzhen, Guangdong 518057 (CN)
(72) Inventor: ZHANG, Zhihui, Shenzhen, Guangdong 518057 (CN)
(74) Representative: Petraz, Gilberto Luigi
(86) International application number: PCT/CN2020/079741
(87) International publication number: WO 2020/207210

(57) **Abstract**

Disclosed are an FEC mode synchronization method and system, and a primary node and a slave node. The method comprises: a slave node receiving a synchronization data packet sent by a primary node, wherein the synchronization data packet includes an FEC transmission mode of the primary node; and adjusting an FEC transmission mode of the slave node according to the FEC transmission node of the primary node.

## Description

### Cross-reference to Related Applications

This application claims the priority of Chinese patent application CN 201910298537.3, entitled "FEC Mode Synchronization Method and System, Master Node and Slave Node" and filed with the China National Intellectual Property Administration on April 12, 2019, the entirety of which is incorporated herein by reference.

### Field of the Invention

The present disclosure relates to the field of optical network communications, and in particular to a forward error correction (FEC) mode synchronization method, a master node, a slave node and a system.

### Background of the Invention

In the high-speed Ethernet, media access control address (MAC) and port physical layer (PHY) interfaces has evolved from an original 10 Gigabit media independent interface (XGMII) into a 100 Gigabit media independent interface (CGMII), with one or more additional FEC functional layers for a hierarchical structure of the PHY. An FEC sublayer is located between a physical coding sublayer (PCS) and a physical medium attachment (PMA) sublayer. A signal will be preprocessed in a certain format before being transmitted, and it is decoded at a slave node according to a specified algorithm, in order to find an error code and correct the error. FEC modes of high-speed Ethernet may be related to services. In addition, different optical modules have different default settings for enabling the FEC mode. If FEC modes at respective receiving and transmitting ends are inconsistent, the Ethernet services will fail to be normally output. There are currently two types of FEC mode synchronization: 1) a mandatory approach, where a master node and a slave node are set to be consistent manually and forcibly; or 2) a slave node polling configuration approach, where the mode of the master node remains unchanged, and the slave node is configured with an FEC mode and a non-FEC mode in sequence. However, manual operations are tedious, and for a complex on-site application scene, a large amount of time and labor costs will be consumed, thereby resulting in waste. When the slave node polling configuration approach is adopted, the polling configuration will be invalid if a non-FEC mode synchronization problem causes the service to be unavailable.

### Summary of the Invention

At least one embodiment of the present disclosure provides an FEC mode synchronization method, a master node, a slave node and a system. By constructing a synchronization data packet, an FEC mode of a slave node can be automatically synchronized with that of a master node, thereby improving the efficiency and stability of signal transmission.

In order to solve the above problems, embodiments of the present disclosure provide an FEC mode synchronization method. The method may include receiving a synchronization data packet sent by a master node, the synchronization data packet including an FEC transmission mode of the master node; and adjusting an FEC transmission mode of a slave node according to the FEC transmission mode of the master node.

The embodiments of the present disclosure further provide an FEC mode synchronization method. The method may include constructing a synchronization data packet, the synchronization data packet including an FEC transmission mode of a master node; and sending the synchronization data packet to a slave node, where the slave node adjusts an FEC transmission mode of the slave node according to the FEC transmission mode of the master node.

The embodiments of the present disclosure further provide a slave node. The slave node may include a receiving module configured to receive a synchronization data packet sent by a master node. The synchronization data packet includes an FEC transmission mode of the master node. The slave node may also include an adjusting module configured to adjust an FEC transmission mode of the slave node according to the FEC transmission mode of the master node.

The embodiments of the present disclosure further provide a master node. The master node may include a constructing module configured to construct a synchronization data packet. The synchronization data packet includes an FEC transmission mode of a master node. The master node may also include a sending module configured to send the synchronization data packet to a slave node. The slave node adjusts an FEC transmission mode of the slave node according to the FEC transmission mode of the master node.

The embodiments of the present disclosure further provide an FEC mode synchronization system, which may include a master node and a slave node. The master node may be configured to construct a synchronization data packet. The synchronization data packet includes an FEC transmission mode of a master node. The master node may be configured to send the synchronization data packet to the slave node. The slave node may be configured to receive the synchronization data packet to obtain the FEC transmission mode of the master node, and to adjust an FEC transmission mode of the slave node itself according to the obtained FEC transmission mode.

### Brief Description of the Drawings

The accompanying drawings are used to provide further understanding of technical solutions of the present disclosure and constitute one part of the description. The drawings are used for interpreting the technical solutions of the present disclosure together with the embodiments of the present disclosure, not for limiting the technical solutions of the present disclosure.
Fig. 1 is a flowchart illustrating an FEC mode synchronization method according to an embodiment of the present disclosure;
Fig. 2 is a flowchart illustrating an FEC mode synchronization method according to another embodiment of the present disclosure;
Fig. 3 is a schematic structural diagram of a synchronization data packet;
Fig. 4 is a schematic diagram of a slave node according to an embodiment of the present disclosure;
Fig. 5 is a schematic diagram of a master node according to an embodiment of the present disclosure;
Fig. 6 is a block diagram of an FEC mode synchronization system according to an embodiment of the present disclosure;
Fig. 7 is a block diagram of an FEC mode synchronization system according to another embodiment of the present disclosure;
Fig. 8 is a flowchart illustrating a one-step method for an FEC mode synchronization process according to an embodiment of the present disclosure; and
Fig. 9 is a flowchart illustrating a two-step method for an FEC mode synchronization process according to an embodiment of the present disclosure.

### Detailed Description of the Embodiments

The technical problems to be solved, technical solutions and advantages of the present disclosure will become apparent from the following detailed description of the disclosed embodiments with reference to the accompanying drawings. It should be noted that embodiments in the present application and features in the embodiments may be randomly combined with each other in case of no conflict.

Steps illustrated in the flow diagram of the drawing can be performed in, for example, a computer system of a set of computer-executable instructions. Although a logic sequence is illustrated in the flow diagram, but in some cases, the steps illustrated or described can be performed in a sequence different from the sequence herein.

In existing technologies, an FEC transmission mode of a master node is carried by a service data packet. When service communication is disconnected, the problem of an FEC mode of a slave node being unable to be synchronized with an FEC mode of the master node would occur.

According to embodiments of the present disclosure, it is provided an FEC mode synchronization method, a master node, a slave node and a system in order to solve the problem of an FEC mode of the slave node being unable to be synchronized with an FEC mode of the master node due to service communication disconnection.

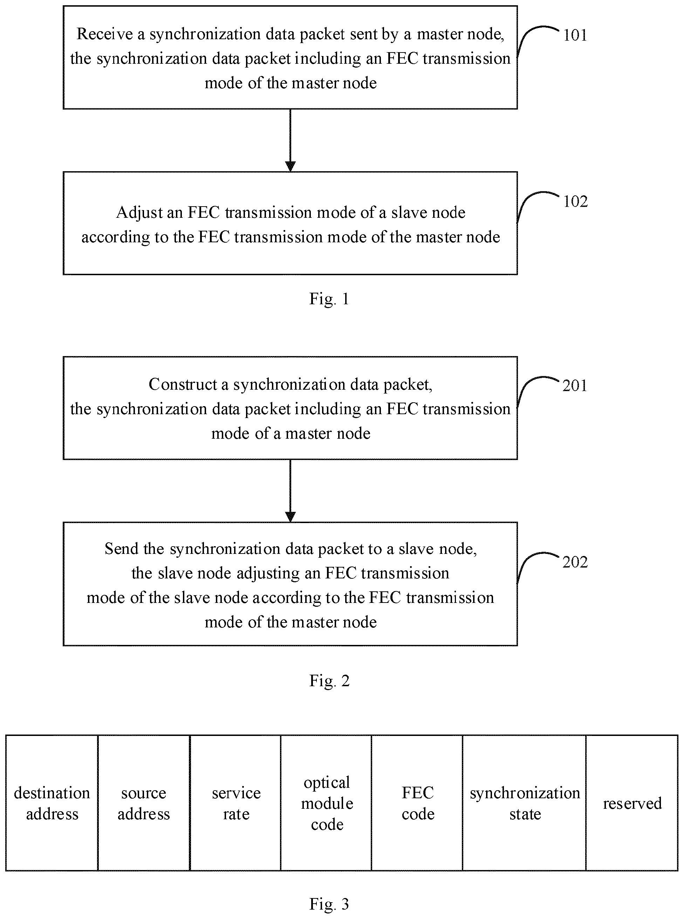

As shown in Fig. 1, an FEC mode synchronization method according to an embodiment of the present disclosure includes the following steps.

At step 101, a synchronization data packet sent by a master node is received. The synchronization data packet includes at least a destination address, a source address, an Ethernet rate of the master node, an optical module type of the master node, an FEC mode of the master node and a synchronization state, as shown in Fig. 3.

At step 102, an FEC transmission mode of a slave node is adjusted according to an FEC transmission mode of the master node.

In some embodiments, step 102 includes the following steps.

At step 1021, a synchronization state of the synchronization data packet is checked.

The slave node checks the destination address, the source address, the Ethernet rate of the master node, the optical module type of the master node, the FEC mode of the master node and the synchronization state of the data packet in the synchronization data packet sent by the master node. The synchronization data packet may also include a reserved bit for transmitting information that may be required in the future.

At step 1022, if the synchronization state of the synchronization data packet is an asynchronous state, when it is detected that the address of the slave node is consistent with the destination address in the synchronization data packet, the Ethernet rate of the slave node is within a frequency offset range of the Ethernet rate in the synchronization data packet, and the optical module type of the slave node is consistent with an optical module compatibility list, adjustment is performed on the FEC mode of the slave node according to the FEC mode in the synchronization data packet.

When it is detected that the address of the slave node is inconsistent with the destination address in the synchronization data packet, the Ethernet rate of the slave node is beyond the frequency offset range of the Ethernet rate in the synchronization data packet, or the optical module type of the slave node is consistent with the optical module compatibility list, no adjustment is performed on the FEC mode of the slave node.

If the synchronization state of the synchronization data packet is a normally synchronous state, no adjustment is performed on the FEC mode of the slave node.

For example, if the synchronization state of the data packet is a normally synchronous state (i.e., Sync), no processing is performed. If the synchronization state of the data packet is an asynchronous state, when it is detected that the address of the slave node is consistent with the destination address in the synchronization data packet, the difference between the Ethernet rates of the master node and the slave node is within a frequency offset range of plus or minus 100 ppm, and the optical module type of the slave node is consistent with the optical module compatibility list, an FEC transmission mode of the slave node is corrected according to the FEC transmission mode in the synchronization data packet, and a response message about the state of the state machine is provided to the master node. If it is detected that the address of the slave node is inconsistent with the destination address in the synchronization data packet, the difference between the Ethernet rates of the master node and the slave node is beyond a frequency offset range of plus or minus 100 ppm, or the optical module type of the slave node is inconsistent with the optical module compatibility list, the FEC mode of the slave node is not altered, and a response message about the state of the state machine is provided to the master node.

FEC modes supported by different optical modules are different, and the optical module compatibility list is used by the slave node to check whether its optical module type supports an FEC mode configuration.

The state machine of the master node is configured to record a current FEC mode synchronization state, and several states of the state machine are defined, such as, but not limited to, an initial state (i.e., Initial), an error state (i.e., Error), a synchronous state (i.e., Sync), etc.

In an embodiment, after step 102, a synchronization state of the FEC transmission mode of the slave node is sent to the master node.

When the synchronization state of the data packet is an asynchronous state, and after the FEC mode of the slave node is adjusted, the master node is provided with the response message about the state of the state machine, which response message includes a synchronous state (i.e., Sync) and an error state (i.e., Error).

As shown in Fig. 2, an FEC mode synchronization method according to an embodiment of the present disclosure includes the following steps.

At step 201, a master node constructs a synchronization data packet. The synchronization data packet includes an FEC transmission mode of the master node.

At step 202, the synchronization data packet is sent to a slave node. The slave node then adjusts an FEC transmission mode of the slave node according to the FEC transmission mode of the master node.

In some embodiments, step 202 includes the following steps.

At step 2021, a synchronization state of the synchronization data packet is checked.

The slave node checks the destination address, the source address, the Ethernet rate of the master node, the optical module type of the master node, the FEC mode of the master node and the synchronization state of the data packet in the synchronization data packet sent by the master node. The synchronization data packet may also include a reserved bit for transmitting information that may be required in the future.

At step 2022, if the synchronization state of the synchronization data packet is an asynchronous state, when it is detected that the address of the slave node is consistent with the destination address in the synchronization data packet, the Ethernet rate of the slave node is within a frequency offset range of the Ethernet rate in the synchronization data packet, and the optical module type of the slave node is consistent with an optical module compatibility list, adjustment is performed on the FEC mode of the slave node according to the FEC mode in the synchronization data packet.

When it is detected that the address of the slave node is inconsistent with the destination address in the synchronization data packet, the Ethernet rate of the slave node is beyond the frequency offset range of the Ethernet rate in the synchronization data packet, or the optical module type of the slave node is consistent with the optical module compatibility list, no adjustment is performed on the FEC mode of the slave node.

If the synchronization state of the synchronization data packet is a normally synchronous state, no adjustment is performed on the FEC mode of the slave node.

For example, if the synchronization state of the data packet is a normally synchronous state (i.e., Sync), no processing is performed. If the synchronization state of the data packet is an asynchronous state, when it is detected that the address of the slave node is consistent with the destination address in the synchronization data packet, the difference between the Ethernet rates of the master node and the slave node is within a frequency offset range of plus or minus 100 ppm, and the optical module type of the slave node is consistent with the optical module compatibility list, an FEC transmission mode of the slave node is corrected according to the FEC transmission mode in the synchronization data packet, and a response message about the state of the state machine is provided to the master node. If it is detected that the address of the slave node is inconsistent with the destination address in the synchronization data packet, the difference between the Ethernet rates of the master node and the slave node is beyond a frequency offset range of plus or minus 100 ppm, or the optical module type of the slave node is inconsistent with the optical module compatibility list, the FEC mode of the slave node is not altered, and a response message about the state of the state machine is provided to the master node.

FEC modes supported by different optical modules are different, and the optical module compatibility list is used by the slave node to check whether its optical module type supports an FEC mode configuration.

The state machine of the master node is configured to record a current FEC mode synchronization state, and several states of the state machine are defined, such as, but not limited to, an initial state (i.e., Initial), an error state (i.e., Error), a synchronous state (i.e., Sync), etc.

The method further includes step 204, at which the FEC transmission mode of the master node in the synchronization data packet is updated when the FEC transmission mode of the master node changes.

For example, it is determined whether the FEC transmission mode of the master node changes. If so, settings are made according to a new FEC transmission mode, the current FEC transmission mode of the master node is updated, the master node is replied with the Sync state of the state machine. In this way, FEC transmission mode synchronization between the master node and the slave node may be achieved.

If there is no change, no processing is performed, operation then continues in an initial FEC mode, the master node is replied with the Error state of the state machine. Also, FEC transmission mode synchronization between the master node and the slave node may be achieved.

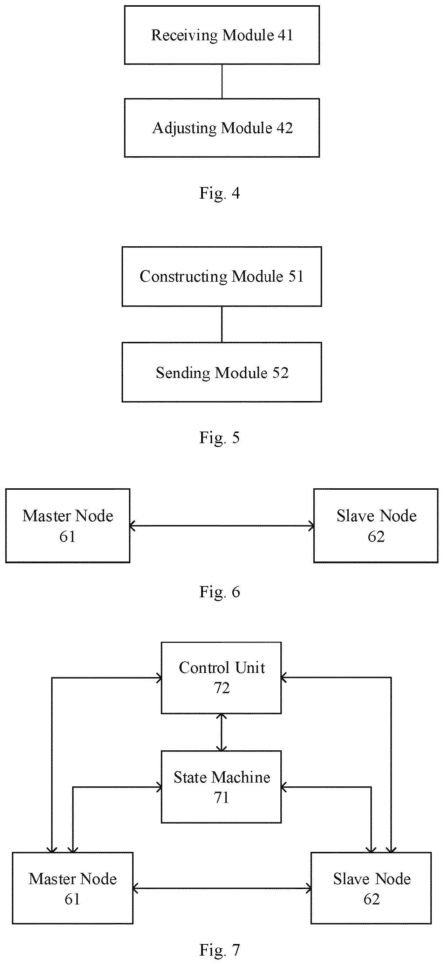

As shown in Fig. 4, a slave node according to an embodiment of the present disclosure includes several following modules.

A receiving module 41 is configured to receive a synchronization data packet sent by a master node. The synchronization data packet includes an FEC transmission mode of the master node.

An adjusting module 42 is configured to adjust an FEC transmission mode of the slave node according to the FEC transmission mode of the master node.

The adjusting module 42 includes the several following units.

A checking unit 4201 is configured to check a synchronization state of the synchronization data packet.

A first adjusting unit 4202 is configured to perform adjustment on the FEC mode of the slave node according to the FEC mode in the synchronization data packet, if the synchronization state of the synchronization data packet is an asynchronous state, and when it is detected that the address of the slave node is consistent with the destination address in the synchronization data packet, the Ethernet rate of the slave node is within a frequency offset range of the Ethernet rate in the synchronization data packet, and the optical module type of the slave node is consistent with an optical module compatibility list.

A second adjusting unit 4204 is configured to perform no adjustment on the FEC mode of the slave node, when it is detected that the address of the slave node is inconsistent with the destination address in the synchronization data packet, the Ethernet rate of the slave node is beyond the frequency offset range of the Ethernet rate in the synchronization data packet, or the optical module type of the slave node is consistent with the optical module compatibility list.

A third adjusting unit 4206 is configured to perform no adjustment on the FEC mode of the slave node, if the synchronization state of the synchronization data packet is a normally synchronous state.

For example, if the synchronization state of the data packet is a normally synchronous state (i.e., Sync), no processing is performed. If the synchronization state of the data packet is an asynchronous state, when it is detected that the address of the slave node is consistent with the destination address in the synchronization data packet, the difference between the Ethernet rates of the master node and the slave node is within a frequency offset range of plus or minus 100 ppm, and the optical module type of the slave node is consistent with the optical module compatibility list, an FEC transmission mode of the slave node is corrected according to the FEC transmission mode in the synchronization data packet, and a response message about the state of the state machine is provided to the master node. If it is detected that the address of the slave node is inconsistent with the destination address in the synchronization data packet, the difference between the Ethernet rates of the master node and the slave node is beyond a frequency offset range of plus or minus 100 ppm, or the optical module type of the slave node is inconsistent with the optical module compatibility list, the FEC mode of the slave node is not altered, and a response message about the state of the state machine is provided to the master node.

FEC modes supported by different optical modules are different, and the optical module compatibility list is used by the slave node to check whether its optical module type supports an FEC mode configuration.

The state machine of the master node is configured to record a current FEC mode synchronization state, and several states of the state machine are defined, such as, but not limited to, an initial state (i.e., Initial), an error state (i.e., Error), a synchronous state (i.e., Sync), etc.

In an embodiment, the slave node further includes a synchronization module 44, which is configured to send a synchronization state of the FEC transmission mode of the slave node to the master node.

When the synchronization state of the data packet is an asynchronous state, and after the FEC mode of the slave node is adjusted, the master node is provided with the response message about the state of the state machine, which response message includes a synchronous state (i.e., Sync) and an error state (i.e., Error).

As shown in Fig. 5, a master node according to an embodiment of the present disclosure includes several following modules.

A constructing module 51 is configured to construct a synchronization data packet. The synchronization data packet includes an FEC transmission mode of a master node.

A sending module 52 is configured to send the synchronization data packet to a slave node. The slave node adjusts an FEC transmission mode of the slave node according to the FEC transmission mode of the master node.

The master node further includes an updating module 53, which is configured to update the FEC transmission mode of the master node in the synchronization data packet when the FEC transmission mode of the master node changes.

For example, it is determined whether the FEC transmission mode of the master node changes. If so, settings are made according to a new FEC transmission mode, the current FEC transmission mode of the master node is updated, the master node is replied with the Sync state of the state machine. In this way, FEC transmission mode synchronization between the master node and the slave node may be achieved.

If there is no change, no processing is performed, operation then continues in an initial FEC mode, the master node is replied with the Error state of the state machine. Also, FEC transmission mode synchronization between the master node and the slave node may be achieved.

As shown in Fig. 6, the FEC mode synchronization system of the embodiment of the present disclosure includes a master node 61 and a slave node 62. The master node constructs a synchronization data packet, which includes an FEC transmission mode of a master node, and sends the synchronization data packet to the slave node. The slave node receives the synchronization data packet to obtain the FEC transmission mode of the master node, and adjusts an FEC transmission mode of the slave node itself according to the obtained FEC transmission mode. In some embodiments, the slave node checks a synchronization state of the synchronization data packet; and performs adjustment on the FEC mode of the slave node according to the FEC mode in the synchronization data packet, if the synchronization state of the synchronization data packet is an asynchronous state, and when it is detected that the address of the slave node is consistent with the destination address in the synchronization data packet, the Ethernet rate of the slave node is within a frequency offset range of the Ethernet rate in the synchronization data packet, and the optical module type of the slave node is consistent with an optical module compatibility list.

When it is detected that the address of the slave node is inconsistent with the destination address in the synchronization data packet, the Ethernet rate of the slave node is beyond the frequency offset range of the Ethernet rate in the synchronization data packet, or the optical module type of the slave node is consistent with the optical module compatibility list, no adjustment is performed on the FEC mode of the slave node.

If the synchronization state of the synchronization data packet is a normally synchronous state, no adjustment is performed on the FEC mode of the slave node.

In another embodiment, as shown in Fig. 7, the system further includes a state machine 71 and a control unit 72. The state machine sends a synchronization state of an FEC transmission mode of a slave node to a master node.

The control unit is configured to update the FEC transmission mode of the master node in the synchronization data packet when the FEC transmission mode of the master node changes.

The present application is further illustrated below by means of several application examples.

### Application Example One

In the application example, an operating process of mode synchronization at a certain FEC node is selected, which involves the following steps.
1) A control unit configures an FEC transmission mode of a master node at a certain node in a network.
2) The control unit detects the state of a state machine.
3) It is detected whether the state machine is an Error state. If so, the process returns to step 1), and if not, the process proceeds to step 4).
4) A slave node receives an FEC mode synchronization data packet, and checks a destination address, a source address, an Ethernet rate of the master node, an optical module type of the master node, an FEC mode of the master node and a synchronization state of the data packet in the received synchronization data packet. When it is detected that the address of the slave node is consistent with the destination address in the synchronization data packet, the difference between the Ethernet rates of the master node and the slave node is within a frequency offset range of plus or minus 100ppm, and the optical module type of the slave node is consistent with an optical module compatibility list, the process proceeds to step 5); otherwise, the master node is replied with the Error state, and then the process returns to step 1).
5) It is determined whether a newly configured FEC transmission mode changes. If so, the process proceeds to step 6); otherwise, no processing is performed, operation then continues in an initial FEC mode, the master node is replied with the Error state of the state machine, and then the process returns to step 1).
6) Settings are made according to a new FEC transmission mode, the current FEC transmission mode of the FEC node is updated, the master node is replied with the Sync state of the state machine, and then the process returns to step 1).
7) FEC transmission mode synchronization between the master node and the slave node is completed.

### Application Example Two

A constructed FEC transmission mode synchronization data packet is transmitted through an optical monitoring channel in an out-of-band manner.

In an application scene, the constructed FEC transmission mode synchronization data packet can be transmitted to a slave node by means of optical monitoring in an out-of-band manner, and an FEC mode synchronization process for the master node and the slave node is enabled after the slave node receives a specific FEC mode synchronization data packet.

### Application Example Three

A constructed FEC transmission mode synchronization data packet is transmitted through an electrical monitoring channel in an in-band manner.

In an application scene, the constructed FEC transmission mode synchronization data packet can be transmitted to a slave node by means of electrical service monitoring in an out-of-band manner, and an FEC mode synchronization process for the master node and the slave node is enabled after the slave node receives a specific FEC mode synchronization data packet.

### Application Example Four

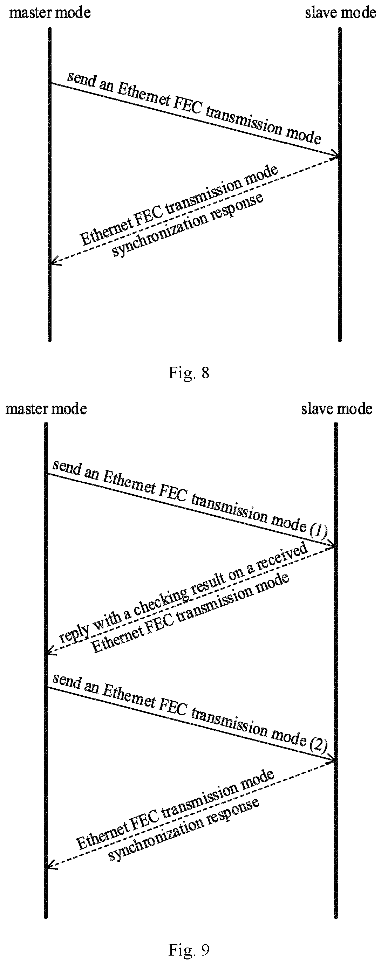

A one-step method for an FEC transmission mode synchronization process is shown in Fig. 8.

In an FEC transmission mode synchronization process between a master node and a slave node, the slave node directly performs adjustment after checking a destination address, a source address, an Ethernet rate of the master node, an optical module type of the master node, an FEC mode of the master node and a synchronization state of a data packet, without need for notifying the master node. That is, an FEC transmission mode of the slave node will be immediately corrected upon reception of a correction request, which can improve processing efficiency.

### Application Example Five

A two-step method for an FEC transmission mode synchronization process is shown in Fig. 9.

In a practical application scene, FEC transmission is mutually interactive. When a time transmission mode of a slave node is automatically synchronized with that of a master node, a two-step method can be utilized. In such a method, the slave node checks a destination address, a source address, an Ethernet rate of the master node, an optical module type of the master node, an FEC mode of the master node and a synchronization state of a data packet, confirms that an obtained FEC transmission mode is legitimate and available and a synchronization data packet is matched, and then needs to synchronously notify the master node of a checking state of the FEC transmission mode. After receiving a confirmation message, the master node replies to the slave node with the same. The FEC transmission mode of the slave node is synchronized only after the slave node receives the confirmation message replied by the master node. This method can improve security and stability.

The present disclosure further provides a storage medium. The storage medium stores a computer program, which is configured, when executed, to implement any one of the above methods.

The present disclosure yet further provides an electronic device, which includes a memory and a processor. The memory has a computer program stored therein, and the processor is configured to execute the computer program to implement any one of the above methods.

In addition, embodiments of the present disclosure still yet further provide a computer program product, which includes a computer program stored in a non-transitory computer-readable storage medium. The computer program includes program instructions which, when executed by a computer, causes the computer to perform the method described in any of the above method embodiments.

Those of ordinary skill in the art can understand that all or some of the steps in the methods disclosed above, and functional modules/units in the system and devices can be implemented in software, firmware, hardware and any suitable combination thereof. In a hardware implementation, the division of the functional modules/units mentioned above does not necessarily correspond to the division of physical assemblies. For example, one physical assembly can have multiple functions, or one function or step can be executed by means of cooperation of several physical assemblies. Some or all of the assemblies can be implemented in software executed by a processor, such as a digital signal processor or a microprocessor, or be implemented in hardware, or be implemented in an integrated circuit, such as an application specific integrated circuit. Such software can be distributed on a computer-readable medium, and the computer-readable medium can include a computer storage medium (or a non-transitory medium) and a communication medium (or a transitory medium). As known to those of ordinary skill in the art, the term "computer storage medium" is intended to include volatile and non-volatile, removable and non-removable media implemented in any method or technology for storing information such as computer-readable instructions, data structures, program modules, or other data. The computer storage medium includes, but not limited to, a RAM, a ROM, an EEPROM, a flash memory or other memory techniques, a CD-ROM, a digital versatile disc (DVD) or other optical storage, a tape cassette, a magnetic tape, a disc storage or other magnetic storage apparatus, or any other media which can be used for storing expected information and can be accessed by a computer. In addition, as known to those of ordinary skill in the art, the communication medium generally includes computer-readable instructions, data structures, program modules or other data in a modulated data signal such as a carrier or other transmission mechanisms, and can include any information transfer medium.

## Claims

1. An FEC mode synchronization method, comprising:
receiving a synchronization data packet sent by a master node, wherein the synchronization data packet includes an FEC transmission mode of the master node; and
adjusting an FEC transmission mode of a slave node according to the FEC transmission mode of the master node.

2. The method according to claim 1, wherein the synchronization data packet includes a destination address, a source address, an Ethernet rate of the master node, an optical module type of the master node, an FEC mode of the master node and a synchronization state.

3. The method according to claim 2, wherein the step of adjusting the FEC transmission mode of the slave node according to the FEC transmission mode of the master node comprises:
checking a synchronization state of the synchronization data packet;
if the synchronization state of the synchronization data packet is an asynchronous state,
when it is detected that the address of the slave node is consistent with the destination address in the synchronization data packet, the Ethernet rate of the slave node is within a frequency offset range of the Ethernet rate in the synchronization data packet, and the optical module type of the slave node is consistent with an optical module compatibility list, performing adjustment on the FEC mode of the slave node according to the FEC mode in the synchronization data packet,
when it is detected that the address of the slave node is inconsistent with the destination address in the synchronization data packet, the Ethernet rate of the slave node is beyond the frequency offset range of the Ethernet rate in the synchronization data packet, or the optical module type of the slave node is consistent with the optical module compatibility list, performing no adjustment on the FEC mode of the slave node; or
if the synchronization state of the synchronization data packet is a normally synchronous state, performing no adjustment on the FEC mode of the slave node.

4. The method according to claim 1, wherein after the step of adjusting the FEC transmission mode of the slave node according to the FEC transmission mode of the master node, the method further comprises: sending a synchronization state of the FEC transmission mode of the slave node to the master node.

5. An FEC mode synchronization method, comprising:
constructing a synchronization data packet, wherein the synchronization data packet includes an FEC transmission mode of a master node; and
sending the synchronization data packet to a slave node, wherein the slave node adjusts an FEC transmission mode of the slave node according to the FEC transmission mode of the master node.

6. The method according to claim 5, wherein the step of the slave node adjusting the FEC transmission mode of the slave node according to the FEC transmission mode of the master node comprises:
checking a synchronization state of the synchronization data packet;
if the synchronization state of the synchronization data packet is an asynchronous state,
when it is detected that the address of the slave node is consistent with the destination address in the synchronization data packet, the Ethernet rate of the slave node is within a frequency offset range of the Ethernet rate in the synchronization data packet, and the optical module type of the slave node is consistent with an optical module compatibility list, performing adjustment on the FEC mode of the slave node according to the FEC mode in the synchronization data packet,
when it is detected that the address of the slave node is inconsistent with the destination address in the synchronization data packet, the Ethernet rate of the slave node is beyond the frequency offset range of the Ethernet rate in the synchronization data packet, or the optical module type of the slave node is consistent with the optical module compatibility list, performing no adjustment on the FEC mode of the slave node; or
if the synchronization state of the synchronization data packet is a normally synchronous state, performing no adjustment on the FEC mode of the slave node.

7. The method according to claim 5, further comprises: when the FEC transmission mode of the master node changes, updating the FEC transmission mode of the master node in the synchronization data packet.

8. A slave node, comprising:
a receiving module configured to receive a synchronization data packet sent by a master node, wherein the synchronization data packet includes an FEC transmission mode of the master node; and
an adjusting module configured to adjust an FEC transmission mode of the slave node according to the FEC transmission mode of the master node.

9. The slave node according to claim 8, wherein the adjusting module comprises:
a checking unit configured to check a synchronization state of the synchronization data packet;
a first adjusting unit configured, if the synchronization state of the synchronization data packet is an asynchronous state, when it is detected that the address of the slave node is consistent with the destination address in the synchronization data packet, the Ethernet rate of the slave node is within a frequency offset range of the Ethernet rate in the synchronization data packet, and the optical module type of the slave node is consistent with an optical module compatibility list, to perform adjustment on the FEC mode of the slave node according to the FEC mode in the synchronization data packet;
a second adjusting unit configured, when it is detected that the address of the slave node is inconsistent with the destination address in the synchronization data packet, the Ethernet rate of the slave node is beyond the frequency offset range of the Ethernet rate in the synchronization data packet, or the optical module type of the slave node is consistent with the optical module compatibility list, to perform no adjustment on the FEC mode of the slave node; and
a third adjusting unit configured, if the synchronization state of the synchronization data packet is a normally synchronous state, to perform no adjustment on the FEC mode of the slave node.

10. A master node, comprising:
a constructing module configured to construct a synchronization data packet, wherein the synchronization data packet includes an FEC transmission mode of a master node; and
a sending module configured to send the synchronization data packet to a slave node, wherein the slave node adjusts an FEC transmission mode of the slave node according to the FEC transmission mode of the master node.

11. An FEC mode synchronization system, comprising a master node and a slave node,
wherein the master node configured to construct a synchronization data packet, wherein the synchronization data packet includes an FEC transmission mode of a master node;
wherein the master node configured to send the synchronization data packet to the slave node; and
wherein the slave node configured to receive the synchronization data packet to obtain the FEC transmission mode of the master node, and to adjust an FEC transmission mode of the slave node itself according to the obtained FEC transmission mode.

12. The system according to claim 11, wherein: the step of adjusting the FEC transmission mode of the slave node itself according to the obtained FEC transmission mode comprises:
checking, by the slave node, a synchronization state of the synchronization data packet;
if the synchronization state of the synchronization data packet is an asynchronous state,
when it is detected that the address of the slave node is consistent with the destination address in the synchronization data packet, the Ethernet rate of the slave node is within a frequency offset range of the Ethernet rate in the synchronization data packet, and the optical module type of the slave node is consistent with an optical module compatibility list, performing adjustment on the FEC mode of the slave node according to the FEC mode in the synchronization data packet,
when it is detected that the address of the slave node is inconsistent with the destination address in the synchronization data packet, the Ethernet rate of the slave node is beyond the frequency offset range of the Ethernet rate in the synchronization data packet, or the optical module type of the slave node is consistent with the optical module compatibility list, performing no adjustment on the FEC mode of the slave node; or
if the synchronization state of the synchronization data packet is a normally synchronous state, performing no adjustment on the FEC mode of the slave node.

13. The system according to claim 11, further comprising at least one of:
a state adjustment unit configured to send a synchronization state of the FEC transmission mode of the slave node to the master node; and
a control unit configured, when the FEC transmission mode of the master node changes, to update the FEC transmission mode of the master node in the synchronization data packet.
